# FASCICULE DE BREVET EUROPEEN

(11) **EP 3 931 509 B1**
(45) Date de publication et mention de la délivrance du brevet: **29.03.2023**
(21) Numéro de dépôt: 20719680.9
(22) Date de dépôt: 27.02.2020
(51) Int. Cl.: F28D 9/00, B64D 13/00, F28D 21/00

(54) **ÉCHANGEUR DE REFROIDISSEMENT D'UN AIR PRIMAIRE CHAUD PAR UN AIR SECONDAIRE FROID ET SYSTÈME DE CONDITIONNEMENT D'AIR ÉQUIPÉ D'UN TEL ÉCHANGEUR**
AUSTAUSCHER ZUR KÜHLUNG VON WARMER PRIMÄRLUFT MIT KÜHLER SEKUNDÄRLUFT UND SYSTEM ZUR KLIMATISIERUNG MIT EINEM SOLCHEN AUSTAUSCHER
EXCHANGER FOR COOLING WARM PRIMARY AIR WITH COOL SECONDARY AIR AND SYSTEM FOR AIR CONDITIONING PROVIDED WITH SUCH AN EXCHANGER

(30) Priorité: 01.03.2019 FR 1902148
(43) Date de publication de la demande: 05.01.2022
(73) Titulaire: Liebherr-Aerospace Toulouse SAS, 31200 Toulouse (FR)
(72) Inventeur: GALZIN, Guillaume, 31016 TOULOUSE Cedex 2 (FR); BLARY, Jean-Raymond, 31016 TOULOUSE Cedex 2 (FR); LAVERGNE, David, 31016 TOULOUSE Cedex 2 (FR)
(74) Mandataire: Bringer IP
(86) Numéro de dépôt international: PCT/FR2020/050387
(87) Numéro de publication internationale: WO 2020/178505

(56) Documents cités:
- EP-A1- 1 365 203
- EP-A1- 1 967 716
- EP-A2- 1 033 484
- WO-A1-2013/147953
- US-A1- 2002 121 103

## Description

### Domaine technique de l'invention

L'invention concerne un échangeur de refroidissement d'un air primaire chaud par un air secondaire froid. L'invention concerne plus particulièrement un tel échangeur de refroidissement, plus connu sous la dénomination d'échangeur primaire de refroidissement ou sous l'acronyme anglais MHX pour *Main Heat Exchanger,* destiné à équiper un système de conditionnement d'air d'une cabine d'un véhicule de transport aérien ou ferroviaire. L'invention concerne également un système de conditionnement d'air d'une cabine d'un véhicule de transport aérien ou ferroviaire comprenant un tel échangeur de chaleur.

### Arrière-plan technologique

Dans tout le texte, le terme « cabine » désigne tout espace intérieur d'un véhicule de transport aérien ou ferroviaire dont la pression et/ou la température de l'air doit être contrôlée. Il peut s'agir d'une cabine pour passagers, du cockpit de pilotage d'un aéronef, d'une soute, et de manière générale de toute zone du véhicule qui nécessite un air à une pression et/ou une température contrôlée. Le terme « turbine » désigne un dispositif rotatif destiné à utiliser l'énergie cinétique de l'air pour faire tourner un arbre supportant les aubes de la turbine. Le terme « compresseur » désigne un dispositif rotatif destiné à augmenter la pression de l'air qu'il reçoit en entrée.

Un système de conditionnement d'air d'une cabine d'un véhicule de transport, tel que par exemple un aéronef, comprend de manière connue un dispositif de prélèvement d'air comprimé sur au moins un compresseur d'un moteur de l'aéronef (tel que par exemple un moteur propulsif ou un moteur auxiliaire de l'aéronef).

Un tel système de conditionnement d'air connu comprend également une turbomachine à cycle à air comprenant au moins un compresseur et une turbine couplés mécaniquement l'un à l'autre, ledit compresseur comprenant une entrée d'air reliée audit dispositif de prélèvement d'air comprimé et une sortie d'air, et ladite turbine comprenant une entrée d'air et une sortie d'air reliée à ladite cabine, pour pouvoir l'alimenter en air à pression et température contrôlées.

Selon une variante, le compresseur de la turbomachine à cycle à air est directement alimenté par de l'air ambiant prélevé à l'extérieur de l'aéronef et la compression de l'air est assurée directement par le compresseur de la turbomachine à cycle à air.

Quel que soit le mode d'alimentation en air comprimé du système, il comprend en général également au moins un échangeur de chaleur, dit échangeur principal de refroidissement, agencé dans un canal de circulation d'air dynamique prélevé à l'extérieur de l'aéronef, entre ladite sortie d'air dudit compresseur et ladite entrée d'air de ladite turbine, ledit échangeur principal comprenant un circuit primaire alimenté par un flux d'air chaud issu dudit compresseur, et un circuit secondaire alimenté par ledit air dynamique formant un flux d'air froid destiné à refroidir ledit flux d'air chaud.

Enfin, un système de conditionnement d'air comprend également en général une boucle d'extraction d'eau agencée entre ledit échangeur de chaleur principal et ladite turbine et configurée pour extraire l'eau du flux d'air chaud refroidi par ledit échangeur principal qui alimente ladite turbine.

Certains systèmes prévoient également d'agencer une conduite de distribution d'eau extraite par ladite boucle d'extraction entre ladite boucle d'extraction d'eau et des pulvérisateurs d'eau logés dans ledit canal d'air dynamique, très en amont dudit échangeur principal, et configurés pour pouvoir pulvériser cette eau extraite par ladite boucle d'extraction d'eau à contre-courant du flux d'air dynamique dudit canal d'air dynamique pour favoriser son évaporation dans le flux d'air avant que l'air ne pénètre dans l'échangeur principal de refroidissement.

Cette injection d'eau liquide sous forme de gouttelettes dans le canal de circulation d'air dynamique, désigné plus communément par les termes de canal d'air ambiant ou de canal RAM air, en amont de l'échangeur de refroidissement, permet d'abaisser la température de l'air en entrée de la passe froide de l'échangeur de refroidissement. En effet, cette eau, en s'évaporant absorbe de la chaleur et permet donc d'abaisser la température de l'air.

Le document de brevet US200911784 au nom du demandeur décrit par exemple un tel système de conditionnement d'air. Un système selon ce mode de réalisation est dorénavant largement utilisé dans un certain nombre d'aéronefs. Cela étant, l'un des inconvénients de cette solution est qu'elle nécessite une grande longueur de canal de circulation d'air dynamique en amont de l'échangeur de chaleur pour y installer les pulvérisateurs.

Le document US 2002/121103 A1 décrit un échangeur de refroidissement selon le préambule de la revendication 1.

Les inventeurs ont cherché à développer un échangeur de chaleur compact dédié notamment à équiper un système de conditionnement d'air d'une cabine d'un véhicule de transport aérien ou ferroviaire, en particulier un système équipé d'une conduite de distribution d'eau extraite par la boucle d'extraction d'eau à destination du canal de circulation d'air dynamique.

### Objectifs de l'invention

L'invention vise à fournir un échangeur de chaleur compact destiné notamment à équiper un système de conditionnement d'air d'un véhicule de transport aérien ou ferroviaire.

L'invention vise également à fournir, dans au moins un mode de réalisation de l'invention, un tel échangeur de chaleur qui présente des performances de refroidissement améliorées par rapport aux échangeurs connus.

L'invention vise également à fournir, dans au moins un mode de réalisation de l'invention, un échangeur de chaleur compact pouvant être logé dans des canaux de circulation d'air dynamique plus courts que ceux actuellement nécessaires pour former un système de conditionnement d'air.

L'invention vise également à fournir un système de conditionnement d'air d'une cabine d'un véhicule de transport, tel qu'un aéronef, équipé d'un échangeur selon l'invention.

### Exposé de l'invention

Pour ce faire, l'invention concerne un échangeur de refroidissement d'un air primaire chaud par un air secondaire froid comprenant :
- une pluralité de canaux superposés de circulation dudit air secondaire, dits canaux secondaires, s'étendant chacun selon une même direction, dite direction secondaire, entre une entrée d'air, dite entrée d'air secondaire, et une sortie d'air, dite sortie d'air secondaire,
- une pluralité de canaux de circulation dudit air primaire, dits canaux primaires, intercalés chacun entre deux canaux secondaires et s'étendant selon une même direction, dite direction primaire, distincte de ladite direction secondaire, entre une entrée d'air, dite entrée d'air primaire, et une sortie d'air, dite sortie d'air primaire, de manière à permettre des échanges thermiques entre l'air primaire desdits canaux primaires et l'air secondaire desdits canaux secondaires.

Un échangeur selon l'invention est caractérisé en ce qu'il comprend en outre :
- des canaux de circulation d'eau, s'étendant chacun adjacent à un canal secondaire selon ladite direction secondaire au voisinage des sorties d'air primaire entre une entrée d'eau et une sortie d'eau de manière à permettre le réchauffement de cette eau par échanges thermiques avec ledit flux d'air primaire desdits canaux primaires,
- des barres creuses micro-perforées de pulvérisation d'eau, s'étendant chacune adjacente à un canal primaire selon ladite direction primaire, entre une entrée d'eau reliée fluidiquement à au moins une sortie d'eau desdits canaux de circulation d'eau et des micro-perforations de pulvérisation d'eau débouchant vers les entrées d'air secondaire de manière à permettre une évaporation de l'eau réchauffée pulvérisée en entrée desdits canaux secondaires qui contribue ainsi à refroidir le flux d'air secondaire en entrée de l'échangeur.

L'échangeur de chaleur selon l'invention présente la particularité de comprendre d'une part des canaux de circulation d'eau agencés chacun le long d'un canal secondaire de manière à pouvoir assurer, lorsque ces canaux de circulation d'eau sont alimentés en eau, des échanges thermiques entre l'eau circulant dans les canaux de circulation d'eau et l'air circulant dans les canaux primaires, et d'autre part des barres creuses de pulvérisation d'eau agencées chacune le long d'un canal primaire de manière à pouvoir pulvériser l'eau réchauffée directement dans le flux d'air secondaire, en entrée de l'échangeur, qui alimente les canaux secondaires de l' échangeur.

En d'autres termes, l'échangeur selon l'invention permet de combiner les fonctions de refroidissement du flux d'air primaire chaud par le flux d'air secondaire froid (par la présence des canaux primaires et secondaires imbriqués), et les fonctions de pulvérisation d'eau dans le flux d'air froid en entrée de l'échangeur (par la présence des canaux de circulation d'eau et des barres creuses de pulvérisation).

L'échangeur selon l'invention est configuré de telle sorte que la pulvérisation d'eau puisse se faire directement en entrée de l'échangeur et non très en amont de l'échangeur, comme c'était le cas pour les systèmes de l'art antérieur. Cela est rendu possible par le fait que l'eau est réchauffée par la présence des canaux de circulation d'eau qui sont en interactions thermiques avec le flux d'air primaire chaud qui circule dans les canaux primaires. En particulier, l'eau étant plus chaude que dans les systèmes antérieurs, l'eau pulvérisée avec un échangeur selon l'invention s'évapore plus vite que dans les solutions de l'art antérieur. Cette augmentation de température de l'eau permet donc d'accélérer le temps d'évaporation et donc de limiter le trajet nécessaire entre la pulvérisation d'eau et l'entrée de l'échangeur.

Un échangeur selon l'invention peut donc avantageusement équiper un système de conditionnement d'air plus compact que les systèmes de l'art antérieur, en évitant notamment de devoir agencer les pulvérisateurs d'eau très en amont de l' échangeur.

Avantageusement et selon l'invention, lesdits canaux primaires et lesdits canaux secondaires sont délimités par une pluralité de plaques parallèles reliées les unes aux autres alternativement par des barres de fermeture, qui s'étendent sur deux côtés opposés des canaux primaires et secondaires de manière à délimiter des passages d'air, lesdites barres creuses micro perforées de pulvérisation d'eau étant formées par les barres de fermeture des canaux primaires s'étendant d'un côté des plaques parallèles au voisinage des entrées d'air secondaire et lesdits canaux de circulation d'eau étant formés par les barres de fermeture des canaux secondaires s'étendant au voisinage des sorties d'air primaire.

Selon cette variante avantageuse, les canaux primaires et secondaires sont délimités, sur le dessus et sur le dessous, par des plaques superposées parallèles entre elles, et de chaque côté par des barres de fermeture, dites respectivement barres de fermeture primaire et barres de fermeture secondaire.

En outre et selon cette variante, les barres creuses de pulvérisation d'eau qui forment des rampes d'injection d'eau dans le flux d'air froid secondaire sont intégrées dans les barres de fermeture primaire au niveau de la bouche d'entrée du flux d'air secondaire froid.

Selon cette variante, la fonction de préchauffage de l'eau est assurée par les barres creuses de fermeture secondaire au niveau de la sortie du flux d'air chaud primaire.

Ces barres de fermeture peuvent être de tout type et dépendent des applications visées et notamment du débit d'eau envisagé par les applications. Ces barres peuvent être des tubes extrudés plus ou moins larges ou complexes selon les applications.

Avantageusement et selon l'invention, lesdites barres creuses micro-perforées formées par lesdites barres de fermeture primaires comprennent chacune un passage interne qui s'étend selon la direction primaire en ouvrant sur ladite entrée d'eau et des micro-perforations qui s'étendent selon ladite direction secondaire à partir dudit passage interne pour pouvoir être alimentées par ce passage interne.

Avantageusement et selon l'invention, lesdits canaux de circulation d'eau formés par lesdites barres de fermeture secondaires comprennent chacun un tube qui s'étend selon la direction secondaire en ouvrant sur ladite entrée d'eau et une sortie d'eau qui s'étend selon ladite direction primaire.

Selon d'autres variantes de réalisation, les canaux primaires et secondaires sont formés par un échangeur résultant d'un procédé de fabrication additive, telle que l'impression 3D. Selon ce mode de réalisation, les canaux de circulation d'eau et les barres micro-perforées sont également directement issus du procédé de fabrication additive. En d'autres termes, la structure de l'échangeur, peut selon ce mode de réalisation de l'invention, être directement obtenu par un procédé de fabrication additive, de sorte que les plaques superposées et les barres de fermeture ne sont plus nécessaires pour former les canaux primaires, secondaires, les canaux de circulation d'eau et les barres creuses micro-perforées.

Avantageusement et selon l'invention, l'échangeur comprend un collecteur d'eau dans lequel débouche lesdites sorties des canaux de circulation d'eau et un distributeur d'eau qui débouche dans lesdites entrées desdites barres micro-perforées, le collecteur d'eau étant relié fluidiquement audit distributeur d'eau par un tuyau de liaison.

Un échangeur selon cette variante comprend un collecteur d'eau configuré pour recevoir l'eau en provenance de toutes les sorties d'eau des canaux de circulation d'eau et un distributeur configuré pour pouvoir distribuer l'eau réchauffée par les canaux de circulation d'eau et collectée par le collecteur à toutes les barres creuses micro-perforées.

Un échangeur selon cette variante facilite les opérations de circulation d'eau entre les canaux de circulation d'eau et les barres creuses micro-perforées.

Avantageusement et selon l'invention, l'échangeur comprend une entrée commune d'air primaire débouchant dans lesdites entrées d'air primaires des canaux primaires et une sortie d'air commune d'air primaire dans laquelle débouchent lesdites sorties d'air primaire desdits canaux primaires.

Un échangeur selon cette variante facilite les opérations d'alimentation en air primaire chaud de l'échangeur et de récupération de l'air primaire chaud refroidi par l'échangeur.

Avantageusement et selon cette variante, lesdits collecteur d'eau, distributeur d'eau, entrée commune d'air primaire et sortie commune d'air primaire sont formés d'une seule pièce.

Avantageusement et selon l'invention, lesdites direction primaire et secondaire sont perpendiculaires l'une à l'autre pour former un échangeur transverse.

Selon cette variante avantageuse, les flux d'air chaud et froid sont transverses. En d'autres termes, les canaux primaires dans lesquels l'air chaud à refroidir est destiné à circuler s'étendent selon une direction perpendiculaire à la direction le long de laquelle s'étendent les canaux secondaires dans lesquels l'air froid est destiné à circuler.

Avantageusement et selon l'invention, chaque canal primaire présente une forme générale de U de sorte que l'entrée primaire est adjacente à la sortie primaire.

Selon ce mode de réalisation, chaque canal primaire présente une forme générale de U constituée de deux branches et d'une tubulure arrondie extrémale qui relie fluidiquement les deux branches du U. Cela permet d'une part d'obtenir l'entrée d'air primaire adjacente à la sortie d'air primaire (les extrémités de chacune des branches du U formant respectivement l'entrée d'air et la sortie d'air) et d'autre part de refroidir le flux d'air chaud deux fois par le flux d'air secondaire froid (chaque canal primaire faisant un aller-retour sur les canaux secondaires), tout en limitant l'encombrement de l'échangeur.

L'invention concerne également un système de conditionnement d'air d'une cabine d'un aéronef comprenant :
- un dispositif de prélèvement d'air,
- une turbomachine à cycle à air comprenant au moins un compresseur et une turbine couplés mécaniquement l'un à l'autre, ledit compresseur comprenant une entrée d'air reliée audit dispositif de prélèvement d'air et une sortie d'air, et ladite turbine comprenant une entrée d'air et une sortie d'air reliée à ladite cabine, pour pouvoir l'alimenter en air à pression et température contrôlées,
- au moins un échangeur de chaleur, dit échangeur principal de refroidissement, agencé dans un canal de circulation d'air dynamique prélevé à l'extérieur de l'aéronef, entre ladite sortie d'air dudit compresseur et ladite entrée d'air de ladite turbine, ledit échangeur principal comprenant un circuit primaire alimenté par un flux d'air chaud issu dudit compresseur, et un circuit secondaire alimenté par ledit air dynamique formant un flux d'air froid destiné à refroidir ledit flux d'air chaud,

- une boucle d'extraction d'eau agencée entre ledit échangeur de chaleur principal et ladite turbine et configurée pour extraire l'eau du flux d'air chaud refroidi par ledit échangeur principal qui alimente ladite turbine,
- une conduite de distribution d'eau extraite par ladite boucle d'extraction qui s'étend entre ladite boucle d'extraction d'eau et ledit canal d'air dynamique, en amont dudit échangeur principal, pour pouvoir pulvériser l'eau extraite par ladite boucle d'extraction d'eau dans le flux d'air dynamique dudit canal d'air dynamique.

Un système de conditionnement d'air selon l'invention est caractérisé en ce que ledit échangeur de refroidissement principal est un échangeur selon l'invention et en ce que ladite conduite de distribution d'eau débouche dans lesdits canaux de circulation d'eau dudit échangeur, lesdits canaux primaires formant ledit circuit primaire dudit échangeur principal alimenté par un flux d'air chaud issu dudit compresseur, et lesdits canaux secondaires formant ledit circuit secondaire alimenté par ledit air dynamique.

Le système selon l'invention permet donc d'utiliser un échangeur selon l'invention et de l'alimenter en eau par l'eau récoltée par la boucle d'extraction d'eau du système de conditionnement d'air.

Le système de conditionnement d'air selon l'invention permet donc de réchauffer l'eau extraite par la boucle d'extraction d'eau par l'échangeur selon l'invention et d'injecter cette eau en entrée d'échangeur. Ce réchauffage de l'eau permet d'optimiser l'efficacité de l'évaporation de l'eau en entrée de l'échangeur et donc d'abaisser la température de l'air dynamique alimentant l'échangeur selon l'invention.

Les inventeurs ont déterminé que l'eau extraite dans une boucle d'extraction d'eau est en général injectée dans le canal d'air dynamique à une température de 20°C. En utilisant un échangeur selon l'invention qui permet de réchauffer cette eau avant pulvérisation en entrée de l'échangeur, il est possible de porter l'eau à une température de l'ordre de 60°C de sorte que le temps d'évaporation peut être divisé d'un facteur 13 de par le changement de la pression de vapeur saturante.

L'invention concerne également un véhicule de transport aérien ou ferroviaire comprenant une cabine et un système de conditionnement d'air de cette cabine, caractérisé en ce que ledit système de conditionnement d'air de la cabine est un système selon l'invention.

Les avantages et effets d'un système de conditionnement d'air selon l'invention s'appliquent *mutatis mutandis* à un véhicule de transport aérien ou ferroviaire selon l'invention.

L'invention concerne également un échangeur de chaleur, un système de conditionnement d'air et un véhicule caractérisés en combinaison par tout ou partie des caractéristiques mentionnées ci-dessus ou ci-après.

### Liste des figures

D'autres buts, caractéristiques et avantages de l'invention apparaîtront à la lecture de la description suivante donnée à titre uniquement non limitatif et qui se réfère aux figures annexées dans lesquelles :
[Fig. 1] est une vue schématique en perspective d'un échangeur de chaleur selon un mode de réalisation de l'invention,
[Fig. 2] est une vue schématique d'un détail de l'échangeur de la Figure 1.
[Fig. 3] est une vue schématique d'un système de conditionnement d'air selon un mode de réalisation de l'invention.
[Fig. 4] est une vue schématique en perspective d'un aéronef selon un mode de réalisation de l'invention.

### Description détaillée d'un mode de réalisation de l'invention

Sur les figures, les échelles et les proportions ne sont pas strictement respectées et ce, à des fins d'illustration et de clarté. Dans toute la description détaillée qui suit en référence aux figures, sauf indication contraire, chaque élément de l'échangeur de chaleur est décrit tel qu'il est agencé lorsque l'échangeur est logé dans un canal de circulation d'air dynamique d'un système de conditionnement d'air d'une cabine d'un aéronef et alimenté d'une part par un air chaud issu d'un dispositif de prélèvement d'air extérieur (par exemple un dispositif de prélèvement d'air sur un compresseur d'un moteur propulsif de l'aéronef), et d'autre part par un air à pression dynamique prélevé à l'extérieur de l'aéronef depuis une écope.

Ainsi, dans toute la suite, la description considère que l'échangeur de chaleur est installé au sein d'un système de conditionnement d'air, étant entendu que l'échangeur de chaleur selon l'invention peut être utilisé pour d'autres applications que le refroidissement d'un air haute température, prélevé par exemple sur un moteur propulsif d'un aéronef. Il peut notamment équiper un système de conditionnement d'air d'un véhicule ferroviaire.

Enfin, les éléments identiques, similaires ou analogues sont désignés par les mêmes références dans toutes les figures.

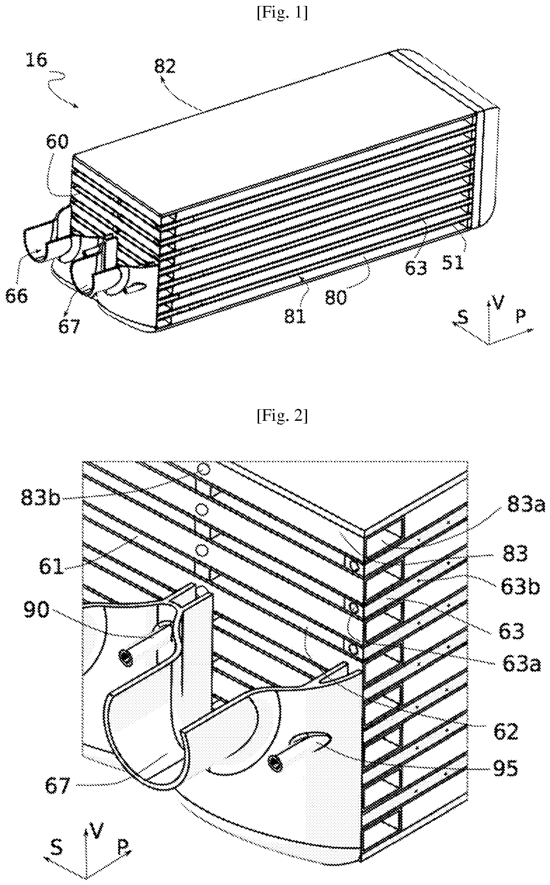

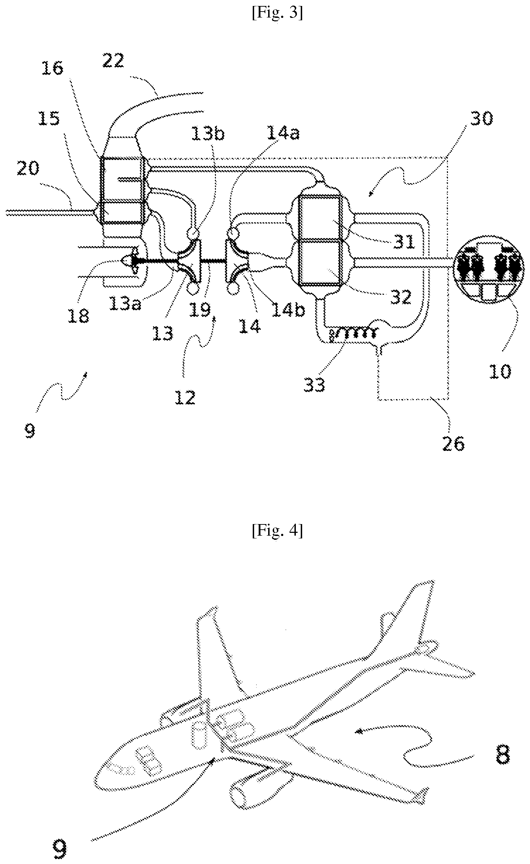

Les figures 1 et 2 illustrent de manière schématique un échangeur 16 de refroidissement d'un air primaire chaud par un air secondaire froid. Dans toute la suite de la description détaillée, l'air primaire est aussi désigné par les termes d'air chaud et l'air secondaire est aussi désigné par les termes d'air froid. Dans toute la suite, l'invention est décrite en considérant que l'air chaud est un air issu d'un dispositif de prélèvement d'air sur un compresseur d'un moteur propulsif d'un aéronef et que l'air froid est un air dynamique prélevé à l'extérieur de l'aéronef par une écope. Cela étant, un échangeur selon l'invention peut bien sûr être utilisé au sein d'autres applications que celles liées à un système de conditionnement d'air d'un aéronef tel que représenté sur la figure 3.

L'échangeur 16 comprend une pluralité de plaques 51 parallèles superposées les unes aux autres et qui définissent entre elles alternativement des canaux primaires 60 et des canaux secondaires 80, c'est-à-dire que chaque canal primaire 60 est imbriqué entre deux canaux secondaires 80. De préférence, le premier canal en partant du bas de l'échangeur est un canal secondaire 80, superposé d'un canal primaire 60 transverse, superposé d'un deuxième canal secondaire 80, superposé d'un deuxième canal primaire transverse, et ainsi de suite jusqu'au dernier canal, qui est de préférence également un canal secondaire. Bien entendu, l'ordre de superposition des canaux peut être différent sans changer le principe de l'invention.

Chaque canal primaire 60 présente, selon le mode de réalisation des figures, une forme générale de U et s'étend entre une entrée d'air primaire 61 et une sortie d'air primaire 62. Chaque branche du U s'étend selon une direction primaire P tel que représenté sur les figures 1 et 2 par le trièdre (P, S, V) où P représente la direction primaire, S représente la direction secondaire et V représente la verticale définie par la gravité.

Chaque canal secondaire 80 s'étend entre une entrée d'air secondaire 81 et une sortie d'air secondaire 82 selon la direction secondaire S.

En d'autres termes, les canaux primaires 60 et les canaux secondaires 80 sont globalement perpendiculaires entre eux et imbriqués par paire de manière à former des zones d'échanges thermiques à chaque interface d'un canal secondaire et d'une branche du canal primaire.

Chaque canal primaire 60 est en outre délimité par des barres de fermeture 63, aussi désignées par les termes de barres de fermeture primaire, qui relient les plaques parallèles 51 entre elles et s'étendent de chaque côté du canal primaire 60 le long de la direction primaire P.

Chaque canal secondaire 80 est également délimité par des barres de fermeture 83, aussi désignées par les termes de barres de fermeture secondaire, qui relient les plaques parallèles entre elles et s'étendent de chaque côté du canal 80 secondaire, le long de la direction secondaire S.

Les barres de fermeture primaire 63 s'étendent entre une entrée d'eau primaire 63a et des orifices 63b de pulvérisation d'eau. En outre, chaque barre de fermeture primaire 63 comprend un passage interne qui s'étend selon la direction primaire P en ouvrant sur l'entrée d'eau 63a et reliant fluidiquement cette entrée 63a et les micro-perforations formées par les orifices 63b de pulvérisation. Ainsi, l'eau qui alimente l'entrée 63a des barres de fermeture 63 est pulvérisée par les orifices 63b de pulvérisation dans le flux d'air qui alimente les canaux secondaires 80.

Les barres de fermeture secondaire 83 s'étendent entre une entrée d'eau secondaire 83a et une sortie d'eau secondaire 83b. Les barres de fermeture 83 sont agencées au voisinage des sorties d'air primaire 62 de telle sorte que l'eau qui alimente l'entrée 83a de chaque barre de fermeture est réchauffée par l'air qui circule dans les canaux primaires 60, au voisinage de la sortie d'air primaire 62. Ces barres de fermeture secondaire 83 forment ainsi des canaux de circulation d'eau. Ces canaux peuvent aussi être formés par des micro-canaux.

L'échangeur selon le mode de réalisation des figures comprend en outre un collecteur d'eau 90 dans lequel débouche les sorties 83b de toutes les barres de fermeture secondaire 83.

L'échangeur selon le mode de réalisation des figures comprend également un distributeur d'eau 95 qui est relié fluidiquement au collecteur d'eau 90 par un tuyau non représenté sur les figures à des fins de clarté et qui débouche dans les entrées d'eau 63a des barres de fermeture primaires 63.

Ainsi, toute l'eau collectée par le collecteur 90 et réchauffée par les échanges thermiques entre les barres de fermeture secondaire 83 et les canaux primaires 60 est distribuée dans les barres de fermeture primaire 63 de telle sorte que cette eau réchauffée puisse être pulvérisée dans le flux d'air secondaire qui alimente l'échangeur.

L'échangeur selon le mode de réalisation des figures comprend également une entrée commune d'air primaire 66 débouchant dans les entrées d'air primaire 61 des canaux primaires 60 et une sortie d'air commune d'air primaire 67 dans laquelle débouchent les sorties d'air primaire 62 des canaux primaires 60.

Le principe général de fonctionnement de l'échangeur 16 est donc le suivant. De l'air chaud issu par exemple d'un dispositif de prélèvement d'air d'un aéronef alimente l'entrée 66 de l'échangeur. Cet air chaud est ensuite distribué aux canaux primaires 60. Au sein de chaque canal 60 en forme de U, l'air chaud circule dans une branche du U le long de la direction primaire P, fait demi-tour par une tubulure arrondie reliant les deux branches parallèles du U, puis circule en sens inverse le long de la direction primaire P pour déboucher dans la sortie d'air 62 qui alimente la sortie commune d'air primaire 67.

En outre, de l'air froid, issu par exemple d'un prélèvement d'air à l'extérieur de l'aéronef, alimente les entrées d'air 81 des canaux primaires 80. Cet air circule dans les canaux secondaires 80 qui s'étendent le long de la direction secondaire S pour ressortir par les sorties 82.

Les canaux primaires 60 étant imbriqués avec les canaux secondaires 80, des échanges thermiques ont lieu entre le flux d'air chaud et le flux d'air froid de telle sorte que le flux d'air qui sort de la sortie commune 67 est refroidi par rapport à l'air en entrée.

En parallèle, de l'eau est injectée dans les entrées 83a des barres de fermeture secondaire. Cette eau est de préférence issue d'une boucle d'extraction d'eau d'un système de conditionnement d'air comme illustré schématiquement sur la figure 3 et décrit ci-après.

Cette eau est réchauffée par des échanges thermiques entre les barres de fermeture secondaire et le flux d'air primaire. Cette eau réchauffée est récoltée par le collecteur d'eau 90 qui est relié au distributeur d'eau 95. Cette eau réchauffée est donc pulvérisée dans le flux d'air froid qui alimente les canaux secondaires 80.

Cette augmentation de température de l'eau permet donc d'accélérer le temps d'évaporation et donc de limiter le trajet nécessaire entre la pulvérisation d'eau et l'entrée de l'échangeur.

Bien entendu, rien n'empêche selon d'autres modes de réalisation de prévoir que les canaux primaires et secondaires sont formés par un procédé de fabrication additive, telle que l'impression 3D. Selon ce mode de réalisation, les canaux de circulation d'eau et les barres micro-perforées sont également directement issus du procédé de fabrication additive. En d'autres termes, la structure de l'échangeur, peut selon ce mode de réalisation de l'invention, être directement obtenu par un procédé de fabrication additive, de sorte que les plaques superposées et les barres de fermeture ne sont plus nécessaires pour former les canaux primaires, secondaires, les canaux de circulation d'eau et les barres creuses micro-perforées. Le fonctionnement d'un échangeur selon ce mode de réalisation de l'invention est identique à celui décrit.

Un échangeur selon l'invention, quel que soit son mode de réalisation, peut en outre équiper un système 9 de conditionnement d'air d'un aéronef d'une cabine 10 d'un aéronef 8 tel qu'illustré sur la figure 3.

Un tel système 9 de conditionnement d'air comprend une turbomachine 12 à cycle à air comprenant un compresseur 13 et une turbine 14 de détente couplés mécaniquement l'un à l'autre par un arbre mécanique 19.

Le compresseur 13 comprend une entrée d'air 13a reliée à un dispositif de prélèvement d'air comprimé non représenté sur la figure 3 à des fins de clarté par l'intermédiaire d'un échangeur primaire de refroidissement, aussi désigné par les termes d'échangeur PHX 15 dans toute la suite (pour *Primary Heat Exchanger* en langue anglaise), et d'une conduite 20 reliant fluidiquement le dispositif de prélèvement d'air et l'échangeur PHX 15.

En d'autres termes, l'air issu du dispositif de prélèvement d'air, qui est par exemple un dispositif de prélèvement d'air sur un compresseur d'un moteur propulsif de l'aéronef ou un dispositif de prélèvement d'air sur un compresseur d'un moteur auxiliaire de l'aéronef, voire un dispositif de prélèvement d'air sur une écope de l'aéronef associée à un compresseur intermédiaire, alimente le compresseur 13 de la turbomachine à cycle à air 12 après passage dans un échangeur primaire PHX 15. Cet échangeur PHX15 comprend une passe chaude formée par l'air délivré par le dispositif de prélèvement d'air par l'intermédiaire de la conduite 20 et une passe froide alimentée par un air à pression dynamique, qui circule dans un canal de 22 de circulation d'un air dynamique, dit ci-après canal d'air dynamique.

La circulation d'air dynamique dans le canal 22 d'air dynamique est assurée par un ventilateur 18 monté sur l'arbre 18 de la turbomachine à cycle à air qui s'étend jusque dans le canal 22 d'air dynamique. Selon d'autres variantes, le ventilateur 18 peut être disjoint de l'arbre 19 et entrainé en rotation par un moteur électrique indépendant.

Le compresseur 13 comprend également une sortie d'air 13b reliée fluidiquement à l'échangeur principal 16 selon l'invention, aussi désigné par l'acronyme MHX 16 dans toute la suite (pour *Main Heat Exchanger* en langue anglaise), qui est agencé dans le canal 22 de circulation d'air dynamique prélevé à l'extérieur de l'aéronef.

Comme décrit précédemment, cet échangeur MHX 16 comprend un circuit primaire chaud alimenté par le flux d'air issu du compresseur 13 et un circuit secondaire froid, en interaction thermique avec le circuit primaire, alimenté par l'air dynamique circulant dans le canal 22 d'air dynamique. En d'autres termes, l'air issu du compresseur 13 est refroidi, dans l'échangeur MHX 16, par l'air dynamique circulant dans le canal 22 de circulation d'air dynamique

La turbine 14 de détente de la turbomachine à cycle à air 12 comprend une entrée d'air 14a alimentée par l'air issu de l'échangeur MHX 16 après passage par une boucle 30 d'extraction d'eau, qui sera décrite ci-après, et une sortie d'air 14b reliée à ladite cabine 10, pour pouvoir l'alimenter en air à pression et température contrôlées.

La boucle d'extraction d'eau 30 comprend, selon le mode de réalisation des figures, un réchauffeur 31 comprenant un circuit primaire d'air alimenté par l'air issu de l'échangeur principal MHX 16, en interaction thermique avec un circuit secondaire alimenté par l'air issu d'un extracteur 33 d'eau et destiné à alimenter l'entrée 14a de la turbine de détente.

La boucle d'extraction d'eau 30 comprend également un condenseur 31 comprenant un circuit primaire d'air alimenté par le flux d'air en sortie du réchauffeur 31, en interaction thermique avec un circuit secondaire d'air alimenté par le flux d'air issu de la turbine 14 de détente, pour permettre une condensation du flux d'air du circuit primaire.

Enfin, la boucle d'extraction comprend également un extracteur d'eau 33 agencé en sortie du condenseur 32 et configuré pour pouvoir récupérer l'eau condensée par le condenseur et la délivrer à une conduite 26 de distribution d'eau, représentée schématiquement en pointillés sur la figure 3.

Cette conduite 26 de distribution d'eau s'étend entre l'extracteur 33 d'eau et les entrées 83a des barres de fermeture secondaire de l'échangeur 16 décrit précédemment. Ainsi, l'eau récupérée par la boucle d'extraction d'eau est directement injectée dans l'échangeur 16 pour pouvoir être réchauffée et pulvérisée dans le flux d'air froid qui alimente l'échangeur 16.

Bien entendu, un échangeur selon l'invention peut aussi être utilisé au sein d'autres applications sans remettre en cause le principe de l'invention.

## Revendications

1. Échangeur (16) de refroidissement d'un air primaire chaud par un air secondaire froid comprenant :
- une pluralité de canaux superposés de circulation dudit air secondaire, dits canaux secondaires (80), s'étendant chacun selon une même direction, dite direction secondaire (S), entre une entrée d'air, dite entrée d'air secondaire (81), et une sortie d'air, dite sortie d'air secondaire (82),
- une pluralité de canaux de circulation dudit air primaire, dits canaux primaires (60), intercalés chacun entre deux canaux secondaires (80) et s'étendant selon une même direction, dite direction primaire (P), distincte de ladite direction secondaire, entre une entrée d'air, dite entrée d'air primaire (61), et une sortie d'air, dite sortie d'air primaire (62), de manière à permettre des échanges thermiques entre l'air primaire desdits canaux primaires (60) et l'air secondaire desdits canaux secondaires (80),
**caractérisé en ce qu'**il comprend en outre :
- des canaux de circulation d'eau (83), s'étendant chacun adjacent à un canal secondaire (80) selon ladite direction secondaire (P) au voisinage des sorties d'air primaire (62) entre une entrée d'eau (83a) et une sortie d'eau (83b) de manière à permettre le réchauffement de cette eau par échanges thermiques avec ledit flux d'air primaire desdits canaux primaires (60),
- des barres creuses micro-perforées (63) de pulvérisation d'eau, s'étendant chacune adjacente à un canal primaire (60) selon ladite direction primaire (P), entre une entrée d'eau (63a) reliée fluidiquement à au moins une sortie d'eau (83b) desdits canaux (83) de circulation d'eau et des micro-perforations (63b) de pulvérisation d'eau débouchant vers les entrées d'air secondaire (81) de manière à permettre une évaporation de l'eau réchauffée pulvérisée en entrée desdits canaux secondaires (80) qui contribue ainsi à refroidir le flux d'air secondaire en entrée de l'échangeur.

2. Échangeur de refroidissement selon la revendication 1, **caractérisé en ce que** lesdits canaux primaires (60) et lesdits canaux secondaires (80) sont délimités par une pluralité de plaques (51) parallèles reliées les unes aux autres alternativement par des barres de fermeture, qui s'étendent sur deux côtés opposés des canaux primaires (60) et secondaires (80) de manière à délimiter des passages d'air, lesdites barres creuses micro perforées (63) de pulvérisation d'eau étant formées par les barres de fermeture des canaux primaires s'étendant d'un côté des plaques parallèles au voisinage des entrées d'air secondaire (81) et lesdits canaux (83) de circulation d'eau étant formés par les barres de fermeture des canaux secondaires (80) s'étendant au voisinage des sorties d'air primaire (62).

3. Échangeur selon la revendication 2, **caractérisé en ce que** lesdites barres creuses micro-perforées (63) formées par lesdites barres de fermeture primaires comprennent chacune un passage interne qui s'étend selon la direction primaire (P) en ouvrant sur ladite entrée d'eau (63a) et des micro-perforations qui s'étendent selon ladite direction secondaire (S) à partir dudit passage interne pour pouvoir être alimentées par ce passage interne.

4. Échangeur selon l'une des revendications 2 ou 3, **caractérisé en ce que** lesdits canaux (83) formés par lesdites barres de fermeture secondaires comprennent chacun un tube qui s'étend selon la direction secondaire (P) en ouvrant sur ladite entrée d'eau (63a) et une sortie d'eau (83b) qui s'étend selon ladite direction primaire (P).

5. Échangeur selon l'une des revendications 3 et 4 prises ensemble, **caractérisé en ce qu'**il comprend un collecteur d'eau (90) dans lequel débouche lesdites sorties des canaux de circulation d'eau et un distributeur d'eau (95) qui débouche dans lesdites entrées desdites barres micro-perforées, le collecteur d'eau (90) étant relié fluidiquement audit distributeur d'eau (95) par un tuyau de liaison.

6. Échangeur selon l'une des revendications 1 à 5, **caractérisé en ce qu'**il comprend une entrée commune d'air primaire (66) débouchant dans lesdites entrées d'air primaires (61) des canaux primaires (60) et une sortie d'air commune d'air primaire (67) dans laquelle débouche lesdites sorties d'air primaire (62) desdits canaux primaires (60).

7. Echangeur selon les revendications 5 et 6 **caractérisé en ce que** lesdits collecteur d'eau (90), distributeur d'eau (95), entrée commune d'air primaire (66) et sortie commune d'air primaire (67) sont formés d'une seule pièce.

8. Échangeur de refroidissement selon l'une des revendications 1 à 7, **caractérisé en ce que** lesdites direction primaire (P) et secondaire (S) sont perpendiculaires l'une à l'autre pour former un échangeur transverse.

9. Échangeur selon l'une des revendications 1 à 8, **caractérisé en ce que** chaque canal primaire (60) présente une forme générale de U de sorte que l'entrée d'air primaire (61) est adjacente à la sortie d'air primaire (62).

10. Système (9) de conditionnement d'air d'une cabine d'un aéronef comprenant :
- un dispositif de prélèvement d'air,
- une turbomachine (12) à cycle à air comprenant au moins un compresseur (13) et une turbine (14) couplés mécaniquement l'un à l'autre, ledit compresseur comprenant une entrée d'air (13a) reliée audit dispositif de prélèvement d'air et une sortie d'air (13b), et ladite turbine (14) comprenant une entrée d'air (14a) et une sortie d'air (14b) reliée à ladite cabine (10), pour pouvoir l'alimenter en air à pression et température contrôlées,
- au moins un échangeur de chaleur, dit échangeur principal (16) de refroidissement, agencé dans un canal (22) de circulation d'air dynamique prélevé à l'extérieur de l'aéronef, entre ladite sortie d'air dudit compresseur et ladite entrée d'air de ladite turbine, ledit échangeur principal (16) comprenant un circuit primaire alimenté par un flux d'air chaud issu dudit compresseur (13), et un circuit secondaire alimenté par ledit air dynamique formant un flux d'air froid destiné à refroidir ledit flux d'air chaud,
- une boucle d'extraction (30) d'eau agencée entre ledit échangeur de chaleur principal (16) et ladite turbine (14) et configurée pour extraire l'eau du flux d'air chaud refroidi par ledit échangeur principal (16) qui alimente ladite turbine,
- une conduite de distribution d'eau (26) extraite par ladite boucle d'extraction qui s'étend entre ladite boucle d'extraction d'eau et ledit canal d'air dynamique, en amont dudit échangeur principal (16), pour pouvoir pulvériser l'eau extraite par ladite boucle d'extraction d'eau dans le flux d'air dynamique dudit canal d'air dynamique,
**caractérisé en ce que** ledit échangeur de refroidissement principal est un échangeur selon l'une des revendications 1 à 9, et **en ce que** ladite conduite de distribution d'eau (26) débouche dans lesdits canaux (83) de circulation d'eau dudit échangeur, lesdits canaux primaires (60) formant ledit circuit primaire dudit échangeur principal alimenté par un flux d'air chaud issu dudit compresseur, et lesdits canaux secondaires (80) formant ledit circuit secondaire alimenté par ledit air dynamique.

11. Véhicule de transport aérien (8) ou ferroviaire comprenant une cabine et un système de conditionnement (9) d'air de cette cabine, **caractérisé en ce que** ledit système de conditionnement d'air de la cabine est un système selon la revendication 10.

## Patentansprüche

1. Wärmetauscher (16) zur Kühlung von heißer Primärluft mittels kalter Sekundärluft, welcher umfasst:
- mehrere als Sekundärkanäle (80) bezeichnete Kanälen, die übereinander angeordnet für die Zirkulation der Sekundärluft bestimmt sind und sich jeweils in derselben als Sekundärrichtung (S) bezeichneten Richtung zwischen einem als Sekundärlufteinlass (81) bezeichneten Lufteinlass und einem als Sekundärluftauslass (82) bezeichneten Luftauslass erstrecken; und
- mehrere als Primärkanäle (60) bezeichnete Kanäle, für die Zirkulation der Primärluft, die jeweils zwischen zwei Sekundärkanälen (80) angeordnet sind und sich in derselben als Primärrichtung (P) bezeichneten Richtung, die sich von der Sekundärrichtung unterscheidet, zwischen einem als Primärlufteinlass (61) bezeichneten Lufteinlass, und einem als Primärluftauslass (62) bezeichneten Luftauslass erstrecken, um einen Wärmeaustausch zwischen der Primärluft der Primärkanäle (60) und der Sekundärluft der Sekundärkanäle (80) zu ermöglichen;
**dadurch gekennzeichnet, dass** der Wärmetauscher zudem umfasst:
- Wasserzirkulationskanäle (83), die sich jeweils benachbart zu einem Sekundärkanal (80) in der Sekundärrichtung (P) in der Nähe der Primärluftauslässe (62) zwischen einem Wassereinlass (83a) und einem Wasserauslass (83b) erstrecken, so dass dieses Wasser durch Wärmeaustausch mit dem Primärluftstrom der Primärkanäle (60) erwärmt werden kann; und
- mikroperforierte Hohlstäbe (63) zur Wasserzerstäubung, die sich jeweils in der Nähe eines Primärkanals (60) in der Primärrichtung (P) zwischen einem Wassereinlass (63a), der mit mindestens einem Wasserauslass (83b) der Wasserzirkulationskanäle (83) strömungsmäßig verbunden ist, und Mikroperforationen (63b) für die Wasserzerstäubung erstrecken, die zu den Sekundärlufteinlässen (81) führen, um die Verdampfung des erhitzten Wassers zu ermöglichen, das am Eingang der Sekundärkanäle (80) zerstäubt wird, und somit zur Kühlung des Sekundärluftstroms am Eingang des Wärmetauschers beiträgt.

2. Wärmetauscher nach Anspruch 1, **dadurch gekennzeichnet, dass** die Primärkanäle (60) und die Sekundärkanäle (80) durch mehrere parallele Platten (51) begrenzt sind, die abwechselnd durch Verschlussleisten miteinander verbunden sind, die sich auf zwei gegenüberliegenden Seiten der Primärkanäle (60) und der Sekundärkanäle (80) erstrecken, um die Luftdurchgänge zu begrenzen, worin die mikroperforierten hohlen Stäbe (63) aus den Verschlussstäben der primären Kanäle gebildet werden, die sich auf einer Seite der parallelen Platten in der Nähe der Sekundärlufteinlässe (81) erstrecken, und worin die Wasserzirkulationskanäle (83) durch die Verschlussstäbe der Sekundärkanäle (80) gebildet werden, die sich in der Nähe der primären Luftauslässe (62) erstrecken.

3. Wärmetauscher nach Anspruch 2, **dadurch gekennzeichnet, dass** die mikroperforierten Hohlstäbe (63), die von den primären Verschlussstäben gebildet werden, jeweils einen inneren Durchgang, der sich in der primären Richtung (P) erstreckt und in den Wassereinlass (63a) mündet, und Mikroperforationen aufweisen, die sich von dem inneren Durchgang aus in der sekundären Richtung (S) erstrecken, so dass sie durch diesen inneren Durchgang versorgt werden können.

4. Wärmetauscher nach Anspruch 2 oder 3, **dadurch gekennzeichnet, dass** die von den sekundären Verschlussstäben gebildeten Kanäle (83) jeweils ein sich in der sekundären Richtung (P) erstreckendes Rohr, das in den Wassereinlass (63a) mündet, und einen sich in der primären Richtung (P) erstreckenden Wasserauslass (83b) umfassen.

5. Wärmetauscher nach einem der Ansprüche 3 und 4 zusammengenommen, **dadurch gekennzeichnet, dass** er einen Wassersammler (90), in den die Auslässe der Wasserzirkulationskanäle münden, und einen Wasserverteiler (95), der in die Einlässe der mikroperforierten Stäbe mündet, umfasst, worin der Wassersammler (90) mit dem Wasserverteiler (95) durch einen Verbindungsschlauch strömungsmäßig verbunden ist.

6. Wärmetauscher nach einem der Ansprüche 1 bis 5, **dadurch gekennzeichnet, dass** er einen gemeinsamen Primärlufteinlass (66), der in die Primärlufteinlässe (61) der Primärkanäle (60) mündet, und einen gemeinsamen Luftauslass (67) für Primärluft aufweist, in den die Primärluftauslässe (62) der Primärkanäle (60) münden.

7. Wärmetauscher nach Anspruch 5 oder 6, **dadurch gekennzeichnet, dass** der Wassersammler (90), der Wasserverteiler (95), der gemeinsame Primärlufteinlass (66) und der gemeinsame Primärluftauslass (67) einstückig ausgebildet sind.

8. Wärmetauscher nach einem der Ansprüche 1 bis 7, **dadurch gekennzeichnet, dass** die Primärrichtung (P) und die Sekundärrichtung (S) senkrecht zueinander stehen, so dass ein Quertauscher ausgebildet wird.

9. Wärmetauscher nach einem der Ansprüche 1 bis 8, **dadurch gekennzeichnet, dass** jeder Primärkanal (60) eine allgemeine U-Form aufweist, so dass der Primärlufteinlass (61) an den Primärluftauslass (62) angrenzt.

10. Klimaanlage (9) für die Kabine eines Flugzeugs, welche umfasst:
- eine Luftablassvorrichtung;
- ein Luftturbinentriebwerk (12), das mindestens einen Kompressor (13) und eine Turbine (14) umfasst, die mechanisch miteinander gekoppelt sind, worin der Kompressor einen Lufteinlass (13a), der mit der Luftablassvorrichtung verbunden ist, und einen Luftauslass (13b) umfasst, und die Turbine (14) einen Lufteinlass (14a) und einen Luftauslass (14b) umfasst, der mit der Kabine (10) verbunden ist, um die Kabine mit Luft mit einem geregelten Druck und einer geregelten Temperatur versorgen zu können;
- mindestens einen Wärmetauscher, der als Hauptwärmetauscher (16) bezeichnet wird, der in einem Kanal (22) für die Zirkulation von Stauluft, die von außerhalb des Flugzeugs kommt, zwischen dem Luftauslass des Kompressors und dem Lufteinlass der Turbine angeordnet ist, wobei der Hauptwärmetauscher (16) einen Primärkreislauf, der mit einem Strom heißer Luft aus dem Kompressor (13) gespeist wird, und einen Sekundärkreislauf umfasst, der mit der Stauluft gespeist wird, die einen Strom kalter Luft zur Kühlung des Stroms heißer Luft bildet;
- eine Wasserentnahmeschleife (30), die zwischen dem Hauptwärmetauscher (16) und der Turbine (14) angeordnet und ausgestaltet ist, Wasser aus dem durch den Hauptwärmetauscher (16) gekühlten Heißluftstrom zu entnehmen, der die Turbine versorgt; und
- eine Leitung (26) zum Verteilen des von der Wasserentnahmeschleife entnommenen Wassers, die sich zwischen der Wasserentnahmeschleife und dem Stauluftkanal stromaufwärts des Hauptwärmetauschers (16) erstreckt, um das von der Wasserentnahmeschleife entnommene Wasser in den Stauluftstrom des Stauluftkanals sprühen zu können,
**dadurch gekennzeichnet, dass** der Hauptwärmetauscher ein Wärmetauscher nach einem der Ansprüche 1 bis 9 ist und dass die Wasserverteilungsleitung (26) in die Wasserzirkulationskanäle (83) des Wärmetauschers mündet, wobei die Primärkanäle (60) den Primärkreislauf des Hauptwärmetauschers ausbilden, der mit einem Heißluftstrom aus dem Kompressor versorgt wird, und die Sekundärkanäle (80) den mit der Stauluft versorgten Sekundärkreislauf ausbilden.

11. Lufttransportfahrzeug (8) oder Schienentransportfahrzeug, welches eine Kabine und einer Klimaanlage (9) für diese Kabine umfasst, **dadurch gekennzeichnet, dass** die Klimaanlage für die Kabine ein System nach Anspruch 10 ist.

## Claims

1. Exchanger (16) for cooling hot primary air by means of cold secondary air, comprising:
- a plurality of channels, referred to as secondary channels (80), placed one on top of the other and intended for the circulation of said secondary air, each extending in the same direction, referred to as the secondary direction (S), between an air inlet, referred to as the secondary air inlet (81), and an air outlet, referred to as the secondary air outlet (82); and
- a plurality of channels, referred to as primary channels (60), for the circulation of said primary air, each interposed between two secondary channels (80) and extending in the same direction, referred to as the primary direction (P), which is different from said secondary direction, between an air inlet, referred to as the primary air inlet (61), and an air outlet, referred to as the primary air outlet (62), so as to allow heat exchanges between the primary air of said primary channels (60) and the secondary air of said secondary channels (80);
**characterized in that** said exchanger further comprises:
- water circulation channels (83), each extending adjacently to a secondary channel (80) in said secondary direction (P) in the vicinity of the primary air outlets (62), between a water inlet (83a) and a water outlet (83b), so as to allow this water to be heated by heat exchanges with said flow of primary air of said primary channels (60); and
- water-spray micro-perforated hollow bars (63), each extending adjacently to a primary channel (60) in said primary direction (P), between a water inlet (63a), which is fluidically connected to at least one water outlet (83b) of said water circulation channels (83), and water-spray micro-perforations (63b) leading toward the secondary air inlets (81), so as to allow evaporation of the heated water sprayed at the inlet of said secondary channels (80), which thus helps to cool the flow of secondary air at the inlet of the exchanger.

2. Cooling exchanger according to claim 1, **characterized in that** said primary channels (60) and said secondary channels (80) are delimited by a plurality of parallel plates (51) that are interconnected alternately by closure bars which extend on two opposite sides of the primary channels (60) and secondary channels (80) so as to delimit air passages, said water-spray micro-perforated hollow bars (63) being formed by the closure bars of the primary channels extending on one side of the parallel plates in the vicinity of the secondary air inlets (81), and said water circulation channels (83) being formed by the closure bars of the secondary channels (80) extending in the vicinity of the primary air outlets (62).

3. Exchanger according to claim 2, **characterized in that** said micro-perforated hollow bars (63) formed by said primary closure bars each comprise an internal passage which extends in the primary direction (P), leading into said water inlet (63a), and micro-perforations which extend in said secondary direction (S) from said internal passage so as to be able to be supplied through this internal passage.

4. Exchanger according to either claim 2 or 3, **characterized in that** said channels (83) formed by said secondary closure bars each comprise a tube which extends in the secondary direction (P), leading into said water inlet (63a), and a water outlet (83b) which extends in said primary direction (P).

5. Exchanger according to any of claims 3 and 4 taken together, **characterized in that** it comprises a water collector (90) into which said outlets of the water circulation channels lead, and a water distributor (95) which leads into said inlets of said micro-perforated bars, the water collector (90) being fluidically connected to said water distributor (95) by a connecting hose.

6. Exchanger according to any of claims 1 to 5, **characterized in that** it comprises a common primary air inlet (66) leading into said primary air inlets (61) of the primary channels (60) and a common air outlet (67) for primary air into which said primary air outlets (62) of said primary channels (60) lead.

7. Exchanger according to either claim 5 or claim 6, **characterized in that** said water collector (90), water distributor (95), common primary air inlet (66) and common primary air outlet (67) are formed in one piece.

8. Cooling exchanger according to any of claims 1 to 7, **characterized in that** said primary direction (P) and secondary direction (S) are perpendicular to each other so as to form a transverse exchanger.

9. Exchanger according to any of claims 1 to 8, **characterized in that** each primary channel (60) has a general U shape such that the primary air inlet (61) is adjacent to the primary air outlet (62).

10. Air conditioning system (9) for a cabin of an aircraft, comprising:
- an air bleed device;
- an air cycle turbine engine (12) comprising at least one compressor (13) and a turbine (14) mechanically coupled to one another, said compressor comprising an air inlet (13a) connected to said air bleed device, and an air outlet (13b), and said turbine (14) comprising an air inlet (14a) and an air outlet (14b) that is connected to said cabin (10) in order to be able to supply said cabin with air at a controlled pressure and temperature;
- at least one heat exchanger, referred to as the main cooling exchanger (16), which is arranged in a channel (22) for the circulation of ram air drawn from outside the aircraft, between said air outlet of said compressor and said air inlet of said turbine, said main exchanger (16) comprising a primary circuit supplied with a flow of hot air from said compressor (13), and a secondary circuit supplied with said ram air, which forms a flow of cold air for cooling said flow of hot air;
- a water extraction loop (30) that is arranged between said main heat exchanger (16) and said turbine (14) and is designed to extract water from the flow of hot air cooled by said main exchanger (16) which supplies said turbine; and
- a pipe (26) for distributing water extracted by said extraction loop, which pipe extends between said water extraction loop and said ram-air channel, upstream of said main exchanger (16), in order to be able to spray the water extracted by said water extraction loop into the ram-air flow of said ram-air channel,
**characterized in that** said main cooling exchanger is an exchanger according to any of claims 1 to 9, and **in that** said water distribution pipe (26) leads into said water circulation channels (83) of said exchanger, said primary channels (60) forming said primary circuit of said main exchanger, which circuit is supplied with a flow of hot air from said compressor, and said secondary channels (80) forming said secondary circuit supplied with said ram air.

11. Air transport vehicle (8) or rail transport vehicle, comprising a cabin and an air conditioning system (9) for this cabin, **characterized in that** said air conditioning system for the cabin is a system according to claim 10.
